# EUROPÄISCHE PATENTSCHRIFT

(11) **EP 3 979 237 B1**
(45) Veröffentlichungstag und Bekanntmachung des Hinweises auf die Patenterteilung: **08.05.2024**
(21) Anmeldenummer: 21197650.1
(22) Anmeldetag: 20.09.2021
(51) Int. Cl.: G10K 11/178, G01F 1/66

(54) **VERFAHREN UND VORRICHTUNG ZUR GERÄUSCHDIAGNOSE UND GERÄUSCHBEEINFLUSSUNG AN EINEM STRÖMUNGSGERÄT, INSBESONDERE EINER LÜFTUNGSANLAGE**
METHOD AND DEVICE FOR DIAGNOSING AND INFLUENCING NOISE IN A FLOW DEVICE, IN PARTICULAR A VENTILATION SYSTEM
PROCÉDÉ ET DISPOSITIF DE DIAGNOSTIC DU BRUIT ET DE L'INFLUENCE DU BRUIT DANS UN APPAREIL D'ÉCOULEMENT, EN PARTICULIER UNE INSTALLATION D'AÉRATION

(30) Priorität: 30.09.2020 DE 102020125515
(43) Veröffentlichungstag der Anmeldung: 06.04.2022
(73) Patentinhaber: Vaillant GmbH, 42859 Remscheid (DE)
(72) Erfinder: Knoop, Thomas, 35510 Butzbach (DE); Billek, Ramon, 42857 Remscheid (DE)
(74) Vertreter: Popp, Carsten

(56) Entgegenhaltungen:
- DE-A1- 4 005 846
- DE-U1-202012 103 045
- US-A1- 2004 258 252
- US-A1- 2017 175 602
- US-B2- 10 030 511

## Beschreibung

Die Erfindung betrifft Strömungsgeräte mit mechanischen Komponenten, welche bei ihrem Betrieb akustische Emissionen (Geräusche) erzeugen. Insbesondere geht es um Strömungsgeräte, in deren Nähe sich typischerweise Menschen aufhalten, die solche Geräusche wahrnehmen und als störend empfinden können. Das Hauptanwendungsgebiet, auf das die Erfindung aber nicht beschränkt ist, liegt daher im Bereich der Heizung, Klimatisierung und/oder Belüftung von Gebäuden.

Es ist bekannt, dass man störende Geräusche vermindern kann, indem man solche Geräusche mit einem Mikrofon aufnimmt und daraus gerade entgegengesetzte Signale erzeugt, die über einen Lautsprecher (oder Kopfhörer) einen Gegenschall erzeugen, so dass durch Interferenzen zumindest ein Teil der Geräusche ausgelöscht oder gemindert wird. Diese Technik ist als *"aktive noise controllcancellation"* (ANC) bekannt. Eine Weiterbildung davon ist unter dem Begriff *"psychoacoustic active noise control"* bekannt, wobei Geräusche, die sich nicht oder nicht vollständig mit der zuvor beschriebenen Technik unterdrücken lassen, durch Hinzufügen anderer Geräusche für Menschen in deren subjektiver Empfindung angenehmer gemacht werden. Dazu kann der gleiche Lautsprecher oder ein Zusatzlautsprecher verwendet werden. Generell kann mit mehreren Mikrofonen und Lautsprechern gearbeitet werden, um Geräusche in größeren Bereichen zu mindern oder angenehmer zu machen. Dies alles wird hier unter dem Begriff "Geräuschbeeinflussung" verstanden.

Apparaturen zur Geräuschbeeinflussung sind aus einigen Technologiegebieten bekannt, so z. B. für eine Luftaustauschvorrichtung aus der DE 20 2012 103 045 U1, für ein Kühlsystem aus DE 40 05 846 A1, oder für den Insassenraum eines Fahrzeugs aus US 2004/0258251.

Weiterhin ist bekannt, Geräusche von Strömungen, Strömungsgeräten und anderen Maschinen mit einem Mikrofon aufzunehmen und zu analysieren. Durch Vergleich mit Erfahrungswerten können so frühzeitig Veränderungen oder Störungen in einer Maschine erkannt werden. Auch eine Regelung, beispielsweise eine Drehzahlregelung einer sich drehenden Komponente, ist mit einer solchen Technik durchführbar.

Mittels Geräuschanalyse können schon heute viele Informationen mit relativ einfachen Mitteln gewonnen werden (es gibt beispielsweise Apps für Handys zur Messung von Strömungsgeschwindigkeiten aus dem Rauschen von Strömungen). Allerdings handelt es sich bisher bei der Analyse von Geräuschen und bei der Unterdrückung oder Beeinflussung von Geräuschen um sehr unterschiedliche technische Gebiete und Ziele.

Aufgabe der vorliegenden Erfindung ist die Verbesserung der Situation gegenüber dem vorstehend beschriebenen Stand der Technik, wobei insbesondere eine Zusammenführung dieser unterschiedlichen Gebiete erreicht werden soll, um für Strömungsmaschinen und dergleichen mit geringem oder keinem zusätzlichen Aufwand an Instrumentierung gleichzeitig eine Geräuschminderung/Geräuschbeeinflussung und eine Messung von Betriebsparametern und/oder Analyse von Betriebszuständen oder Störungen zu ermöglichen. Insbesondere soll auch der sensorische Aufwand für den Betrieb solcher Strömungsmaschinen reduziert und/oder einfach redundant gestaltbar sein. Dazu sollen geeignete Vorrichtungen und Verfahren angegeben werden. Ein zugehöriges Computerprogramprodukt zur Durchführung des Verfahrens soll ebenfalls geschaffen werden.

Zur Lösung dieser Aufgabe dienen Verfahren und Vorrichtungen gemäß den unabhängigen Ansprüchen. Vorteilhafte Ausgestaltungen und Weiterbildungen der Erfindung sind in den jeweiligen abhängigen Ansprüchen angegeben. Die Beschreibung, insbesondere im Zusammenhang mit der Zeichnung, veranschaulicht die Erfindung und gibt bevorzugte Ausführungsbeispiele an.

Hierzu trägt eine Vorrichtung zur Geräuschanalyse und Geräuschbeeinflussung an einem Strömungsgerät oder dergleichen bei, welche mindestens ein Mikrofon und mindestens einen Lautsprecher aufweist, wobei das Mikrofon mit einem Geräuschanalysemodul und einem Geräuschbeeinflussungsmodul verbunden ist. Der Lautsprecher ist hierbei zumindest von dem Geräuschbeeinflussungsmodul ansteuerbar. Zudem ist das Geräuschanalysemodul eingerichtet, aus mittels des Mikrofons erfassten Geräuschen einer Strömung deren Strömungsgeschwindigkeit zu ermitteln.

Die Vorrichtung kann in oder an einem Strömungsgerät angeordnet und/oder in diesem integriert sein. Der Begriff "Strömungsgerät" ist hier insbesondere auf ein Gerät bezogen, das vorgesehen oder eingerichtet ist, eine Strömung von Gasen bzw. Luft anzusaugen, zu fördern, zu beeinflussen und/oder abzugeben. Das Strömungsgerät kann insbesondere eingerichtet sein, die eintretende (Luft-)Strömung hinsichtlich Temperatur, Geschwindigkeit und/oder Strömungsrichtung zu verändern. Das Strömungsgerät ist insbesondere eingerichtet für die Verwendung von Räumen eines Gebäudes, beispielsweise hinsichtlich des Temperaturbereiches und/oder der Reinheit der Gasströmung. Unter einem Strömungsgerät wird eine ganze Gruppe von Geräten verstanden, insbesondere Geräte, die in irgendeiner Weise ein Fluid (bevorzugt Gas oder Luft) bewegen. Dazu gehören alle Arten von Lüftern, Luftwärmepumpen, Gasbrennwertgeräte mit Lüfter, Gebläse, Kompressoren, Turbinen, Pumpen, Klimageräte, Ventilatoren, bevorzugt solche für Gebäudelüftung und industrielle Lüftung. Weiterhin kann die Erfindung auch bei hydraulischen Komponenten eingesetzt werden, wie z.B. Heizungspumpen.

Die Module können elektronische Bauteile oder Bauteil-Komponenten einer übergeordneten Baueinheit, insbesondere an oder in dem Mikrophon sein. Sie können jeweils mit dem Mikrophon bzw. Lautsprecher integriert vorgesehen sein. Ein Mikrophon kann in dem Strömungsgerät, in einer Strömungsleitungen und/oder in der Nähe einer Strömungsleitung (ggf. auch außerhalb des Gerätes) angeordnet sein.

Die hier offenarte Vorrichtung zur kombinierten Geräuschanalyse und Geräuschbeeinflussung kann mit einem einzigen System aus (akustischem) Mikrofon und Lautsprecher einerseits Messignale erzeugen, die eine Bewertung/Einstellung der Strömungsverhältnisse erlaubt und andererseits (gleichzeitig, ggf. andernorts im Strömungsgerät) eine Geräuschbeeinflussung (automatisch bzw. auf Basis dieser Messignale) vornehmen.

Insbesondere kann ein mittels des (akustischen) Mikrofons erfasster Schalldruckpegel und/oder eine mittels des (akustischen) Mikrofons erfasste Schallfrequenz (unmittelbar, also insbesondere ohne rotierende/angetriebene Geräuschquellen) als Maß für die Strömungsgeschwindigkeit der Strömung im Bereich des Mikrofons herangezogen werden. Gleichzeitig können erfasste Schalldruckpegel und/oder Schallfrequenzen als Maß für eine Beeinflussung des Geräusches der Strömung an der Stelle des Lautsprechers herangezogen werden. Die Strömungsgeschwindigkeit kann auch (unmittelbar) als Maß für das Strömungsvolumen eingesetzt bzw. herangezogen werden.

Insbesondere kann auf den Einsatz von Ultraschall-Messsysteme vermieden werden, welche sehr komplex und nur begrenzt einsetzbar sind. Auch kann so die Auswertung, die bei Ultraschall-Messsignalen mittels einer Differenzanalyse von Phasen, Frequenzen oder Impulslaufzeiten erfolgt, reduziert werden.

Die Vorrichtung bietet zum Beispiel den Vorteil, dass ein *"Active Noise Cancelling"-*System mit einer Volumenstromsensorik kombiniert wird.

Soweit das Strömungsgerät einen Lüfter umfasst, ist zu berücksichtigen, dass dieser in der Regel nur über einen schmalen Frequenzbereich hohe Schallpegel (Schaufeldrehklang) erzeugt. Der Einfluss dieses Schaufeldrehklangs kann reduziert werden, indem ein gewisser Abstand des Mikrofons zum Lüfter eingehalten wird. Der Abstand selbst kann vom Fachmann geeignet gewählt werden, insbesondere auch in Abhängigkeit davon, wie charakteristisch das Lüftergeräusch herausfilterbar ist und/oder inwieweit das Lüftergeräusch ggf. noch zusätzlich mit analysiert werden soll.

Für eine konkrete, eingerichtete Vorrichtung kann die spezifische Korrelation (ggf. Kennfeld) von Strömungsgeräusch und Strömungsgeschwindigkeit, sowie ggf. auch hinsichtlich Lüftergeräusch und Drehzahl, im Rahmen von Tests bzw. Versuchen ermittelt und nachfolgend zum Vergleich mit den aktuell erfassten Messsignalen verglichen werden. Diese Korrelation kann auch auf einem Datenspeicher des Geräuschanalysemoduls bereitgestellt werden.

Eine solche Ausgestaltung der Vorrichtung kann für unterschiedliche Strömungsgeräte auch unterschiedliche Effekte zur Folge haben bzw. neue Möglichkeiten eröffnen: Beispielhaft herausgestellt seien folgende:
- Bei Lüftungsgeräten kann eine Konstantvolumenstromregelung vorgesehen sein, wobei mit dem hier vorgeschlagenen System die Konstanz der Strömungsgeschwindigkeit bzw. des Strömungsvolumens technisch einfach akustisch überwacht und geregelt werden kann.
- Bei Luftwärmepumpen besteht das Problem, dass der geförderte Volumenstrom bei zufrierendem Verdampfer abnimmt. Dies könnte mit der vorgeschlagenen Vorrichtung bzw. Methode gemessen werden. Darauf aufbauend kann der Volumenstrom konstant gehalten und/oder eine Vereisung frühzeitig erkannt werden.
- Bei Gasbrennwertgeräten kann diese Vorrichtung bzw. Methode zur Regelung des Gas-Luft-Gemisches herangezogen werden.

Das Geräuschanalysemodul kann eingerichtet sein, ermittelte oder erfasste und dem Geräuschanalysemodul zugeführte Daten betreffend geräuschcharakteristische Parameter auszuwerten. Dafür kann das Geräuschanalysemodul mit dem Mikrophon derart datenleitend verbunden sein, dass die mittels des Mikrophons aufgenommenen Geräusche dem Geräuschanalysemodul zugeführt und dort verarbeitet werden können. Die Analyse umfasst insbesondere das Berechnen von Kennzahlen, Vergleichen mit vorgegebenen Grenzwerten bzw. Bereichen und/oder das Gewichten von Faktoren.

Das Geräuschbeeinflussungsmodul kann eingerichtet sein, direkt vom Mikrophon und/oder via des Geräuschanalysemoduls zugeführte Daten betreffend die Erzeugung von mittels des Lautsprechers zu generierenden Geräuschen zu verarbeiten und/oder den Betrieb des Lautsprechers gezielt einzustellen. Dafür kann das Mikrophon und/oder das Geräuschbeeinflussungsmodul mit dem Lautsprecher derart elektrisch oder elektronisch verbunden sein, dass die vom Lautsprecher abgegebenen Geräusche anpassbar sind, z. B. hinsichtlich des Startzeitpunkts, der Frequenz, der Lautstärke, des Endzeitpunkts, etc..

Durch eine doppelte Verwendung des Mikrofons (Strömungsmesser und Geräuschmesser) sind keinerlei zusätzliche Einbauten an dem Strömungsgerät erforderlich.

Bevorzugt wird der Lautsprecher doppelt genutzt, indem er auch von dem Geräuschanalysemodul zur Abgabe eines Warnsignals ansteuerbar ist. Dabei kann der Lautsprecher auch für weitere Zwecke eingesetzt werden, zum Beispiel zur Abgabe eines Warntons, wenn ein Luftqualitätssensor in einem Raum kritische Werte detektieren.

In einer bevorzugten Ausführungsform ist das Geräuschanalysemodul eingerichtet, (zeitliche) Veränderungen der von dem Strömungsgerät emittierten Geräusche zu erkennen und diese Veränderungen zu analysieren.

Insbesondere ist das Geräuschanalysemodul eingerichtet ist, Veränderungen je nach ihrer Relevanz für einen sicheren und/oder störungsfreieren Betrieb des Strömungsgerätes in unterschiedliche vorgebbare Klassen (Kategorien) einzuordnen. Hierzu werden z. B. aus Erfahrungswerten gewonnene Daten (Kalibrierdaten) in dem Analysegerät gespeichert und mit denen gemessener Geräusche verglichen. Typischerweise werden dazu Frequenzanalysen und/oder Geräuschpegel verwendet.

In einer besonderen Ausführungsform ist der Lautsprecher auch von dem Geräuschanalysemodul ansteuerbar, und das Geräuschanalysemodul ist eingerichtet, bei festgestellten Veränderungen, die in vorgebbare Klassen fallen, akustische Signale über den Lautsprecher zu erzeugen. Solche Signale können als einfacher (anhaltender) Warnton ausgestaltet sein, es ist aber auch die Erzeugung von verschiedenen unterscheidbaren Signalen oder Signalfolgen für verschiedene Vorkommnisse möglich.

Vorzugsweise ist das Geräuschanalysemodul eingerichtet, bestimmte Anteile der von dem Strömungsgerät emittierten Geräusche bestimmten Betriebsparametern des Strömungsgerätes zuzuordnen und diese Parameter zu messen und/oder zu regeln. So können verschiedene Parameter wie Strömungsgeschwindigkeit, Drehzahl von Komponenten, Auftreten von Resonanzen und dergleichen gemessen und sogar zu einer Regelung oder Vermeidung ungewünschter Bereiche eingesetzt werden. Ein weiterer Betriebsparameter bzw. Betriebszustand, auf den aus der Geräuschanalyse geschlossen werden kann, ist ein Verschleißzustand oder ein Zeitraum bis zu einem zu erwartenden Ausfall eines Lagers von drehenden Teilen. Insbesondere kann aus den Geräuschen des Lagers im Betrieb auf dessen Verschleiß geschlossen werden. Ebenso ist möglich, einen ggf. vorliegenden Lüfter zu erkennen und ggf. auch hier Fehlfunktionen aufgrund unerwarteter Geräusche zu identifizieren.

In einer Ausführungsform ist nur das Geräuschbeeinflussungsmodul eingerichtet, um aus den von dem Mikrofon aufgenommenen Geräuschen Signale zur aktiven Geräuschbeeinflussung zu erzeugen und damit den Lautsprecher anzusteuern, während das Geräuschanalysemodul im ungestörten Betrieb keine Signale abgibt.

Weiter wird ein Verfahren zur (kombinierten) Geräuschanalyse und Geräuschbeeinflussung für ein Strömungsgerät oder dergleichen vorgeschlagen, wobei mit mindestens einem gemeinsamen (insbesondere übergeordneten und/oder einzigen) Mikrofon von dem Strömungsgerät emittierte Geräusche aufgenommen und an ein Geräuschanalysemodul und ein Geräuschbeeinflussungsmodul weitergeleitet werden, wobei das Geräuschanalysemodul die Geräusche nach vorgebbaren Kriterien analysiert und das Geräuschbeeinflussungsmodul aus den Geräuschen Gegensignale erzeugt, die einen Lautsprecher ansteuern, so dass dieser die Geräusche unterdrückt, verringert oder nach vorgebbaren Kriterien verändert. Zudem führt das Geräuschanalysemodul eine Messung einer Strömungsgeschwindigkeit durch.

Die Erläuterungen zur Vorrichtung können zur Charakterisierung des Verfahrens herangezogen werden und umgekehrt.

Die Geräuschbeeinflussung kann im Inneren des Strömungsgeräts und/oder in einem Raum stattfinden, in dem das Strömungsgerät aufgestellt ist, in einem belüfteten Raum und/oder in/an der (Strömungs)Leitung. Der Aufstellort von Mikrofon und Lautsprecher (oder auch von mehreren Mikrofonen und Lautsprechern) kann dort liegen, wo dies zur Geräuscherfassung und/oder Geräuschbeeinflussung erforderlich oder gewünscht ist. Nützlich ist es, wenn das Mikrofon in einem Bereich angeordnet ist, in dem das Geräusch noch im Wesentlichen unbeeinflusst ist.

Bevorzugt führt das Geräuschanalysemodul mindestens eine der folgenden Analysen an dem Geräusch durch:
a. Ermittlung eines periodischen Signals zur Messung einer Drehzahl (eines Motors, Lüfters, Turbinenrades, etc.),
b. Ermittlung einer Veränderung des Geräusches und Klassifizierung der Veränderung in vorgebbare Klassen je nach Relevanz der Veränderung für Sicherheit und/oder störungsfreien Betrieb,
c. Erkennung des Auftretens einer (Schwingungs-)Resonanz am Gerät oder einem Teil davon,
d. Erkennung einer Unwucht eines rotierenden Bauteils,
e. Erkennung eines Lagerschadens eines Lagers für ein rotierendes Bauteil und/oder Ermittlung von Wartungsvorhersagen (Predictive Maintenance Meldung) aufgrund einer Änderung des Lager-/Bauteilgeräusches (z.B.: "Lageraustausch innerhalb der nächsten 1000h Betriebsstunden nötig")
f. Erkennung eines Typs eines Bauteils anhand vorgebbarer gespeicherter Kalibrierdaten für verschiedene Typen eines Bauteils.

Besonders bevorzugt ist, dass zusätzlich zur Strömungsgeschwindigkeit eine Ermittlung der Drehzahl eines Motors, Lüfters, Turbinenrades, etc. (siehe Analyse a. oben) und eine Ermittlung eines Lagerschadens (siehe Analyse e. oben) erfolgt. Es ist möglich, dass mehr als zwei der genannten Analysen a. bis f. in der Vorrichtung bzw. im Rahmen des Verfahrens ausführbar sind. Es ist möglich, dass die Vorrichtungen so eingerichtet ist, eine Mehrzahl, eine Vielzahl oder sogar alle dieser Analysen a. bis f. durchzuführen.

Soweit hier Bauteile angesprochen sind, handelt es sich dabei insbesondere um Komponenten des Strömungsgeräts. Einige der beschriebenen Möglichkeiten sind aus dem Stand der Technik für Geräuschanalysen bekannt, aber nicht gemeinsam mit einer Geräuschbeeinflussung im Sinne einer ANC. Besonders hervorzuheben ist aber die Möglichkeit, anhand von Geräuschen den Typ eines Bauteils zu identifizieren. So kann beispielsweise jederzeit ohne Eingriff in die eine Anlage und deren laufenden Betrieb festgestellt werden, ob nach einer Reparatur das richtige Ersatzteil eingebaut wurde oder welcher Typ in einer bestimmten Anlage verbaut ist. Generell können einige Sensoren durch die akustische Analyse eingespart werden. Andere Vorteile ergeben sich zum Beispiel durch Strömungsmessung anhand von Geräuschen (jede Strömungsgeschwindigkeit erzeugt ein charakteristisches Rauschen). So können beispielsweise bei Radiallüftern effiziente Bauformen mit rückwärts gekrümmten Schaufeln ohne Volumenstromsensoren eingesetzt werden, indem der Volumenstrom akustisch ermittelt wird.

In einer speziellen Ausführungsform wird mindestens ein gemessener Parameter als Ist-Wert für eine Regelung des Strömungsgeräts genutzt. Zugehörige elektronische Regelkreise sind dabei typischerweise in dem Geräuschanalysemodul integriert oder die Messwerte des Parameters werden an ein Regelmodul weitergeleitet.

Bei für den Betrieb oder die Sicherheit relevanten Vorgängen steuert das Geräuschanalysemodul erfindungsgemäß bei vorgebbaren Parameterbereichen oder Veränderungen, die in vorgebbare Klassen fallen, den Lautsprecher mit zugeordneten Signalen an, um eine Warnmeldung oder Störmeldung zu erzeugen. So können Personen in der Nähe gewarnt oder informiert werden, ohne dass es zusätzlicher Einrichtungen bedarf.

Bevorzugt werden bei Erkennung des Auftauchens einer Resonanz Schritte eingeleitet, die Resonanz nicht auftreten zu lassen oder sie schnell zu überwinden.

Es kann ein Computerprogramprodukt vorgesehen sein, umfassend Befehle, die bewirken, dass die beschriebene Vorrichtung das beschriebene Verfahren ausführt.

Ein schematisches Ausführungsbeispiel der Erfindung, auf das diese jedoch nicht beschränkt ist, und die Funktionsweise eines vorteilhaften Verfahrens werden im Folgenden anhand der Zeichnung näher erläutert. Es stellen dar:

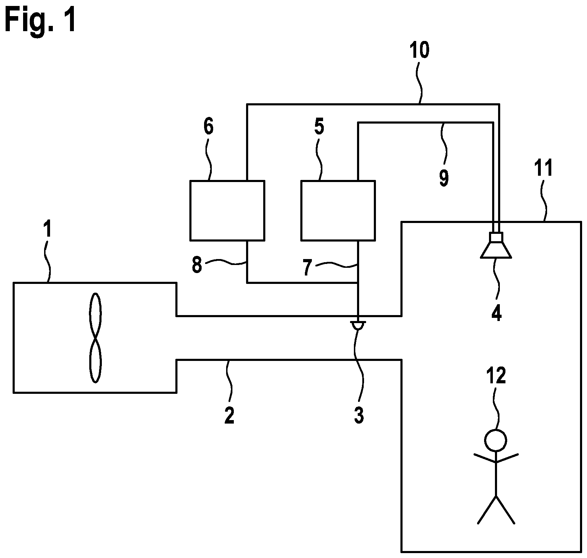

- Fig. 1:: schematisch eine Anordnung zur Geräuschanalyse und Geräuschbeeinflussung an eines Strömungsgeräts

Fig. 1 zeigt schematisch ein Strömungsgerät 1 mit einer zugehörigen Leitung 2, in der ein Mikrofon 3 angeordnet ist. Dieses Mikrofon 3 nimmt von dem Strömungsgerät 1 und der Leitung 2 emittierte Geräusche auf und leitet entsprechende Signale über eine erste Signalleitung 7 an ein Geräuschbeeinflussungsmodul 5 weiter. Dieses erzeugt daraus Gegensignale, die über eine erste Lautsprecherleitung 9 einen Lautsprecher 4 ansteuern. Dieser ist in der Leitung 2 oder wie hier dargestellt in einem Raum 11 angeordnet, in dem sich Personen 12 aufhalten können, die möglichst wenig negativ von Geräuschen beeinflusst werden sollen. Außerdem werden über eine zweite Signalleitung 8 vom Mikrofon 3 aufgenommene Signale an ein Geräuschanalysemodul 6 weitergeleitet, welches die Signale analysiert, mit gespeicherten Daten vergleicht und kategorisiert. Dies kann einerseits zu einer Regelung von Vorgängen in dem Strömungsgerät 1 genutzt werden, andererseits aber auch, um bei Auftreten von bestimmten vorgebbaren Ereignissen eine Warnmeldung oder Störungsmeldung auszugeben. Dies erfolgt über eine zweite Lautsprecherleitung 10, so dass der Lautsprecher 4 auch für entsprechende Signale genutzt werden kann.

Die hier vorgeschlagene Lösung erlaubt es, mit geringem apparativem Aufwand eine Geräuschbeeinflussung und eine Geräuschanalyse an einem Strömungsgerät durchzuführen, wodurch sich wirtschaftlich günstige und/oder zusätzliche Möglichkeiten für einen sicheren und als angenehm empfundenen Betrieb des Strömungsgeräts sowie Wartungsvorhersagen (Predictive Maintenance Meldung) ergeben.

### Bezugszeichenliste

- 1: Strömungsgerät
- 2: Leitung
- 3: Mikrofon
- 4: Lautsprecher
- 5: Geräuschbeeinflussungsmodul
- 6: Geräuschanalysemodul
- 7: Erste Signalleitung
- 8: Zweite Signalleitung
- 9: Erste Lautsprecherleitung
- 10: Zweite Lautsprecherleitung
- 11: Raum
- 12: Person

## Patentansprüche

1. Vorrichtung zur Geräuschanalyse und Geräuschbeeinflussung an einem Strömungsgerät (1), aufweisend mindestens ein Mikrofon (3) und mindestens einen Lautsprecher (4), wobei das Mikrofon (3) mit einem Geräuschanalysemodul (6) und einem Geräuschbeeinflussungsmodul (5) verbunden ist, und der Lautsprecher (4) zumindest von dem Geräuschbeeinflussungsmodul (5) ansteuerbar ist, **dadurch gekennzeichnet, dass** das Geräuschanalysemodul (6) eingerichtet ist, aus mittels des Mikrofons (3) erfassten Geräuschen einer Strömung deren Strömungsgeschwindigkeit zu ermitteln.

2. Vorrichtung nach Anspruch 1, wobei der Lautsprecher (4) auch von dem Geräuschanalysemodul (6) zur Abgabe eines Warnsignals ansteuerbar ist.

3. Vorrichtung nach Anspruch 1 oder 2, wobei das Geräuschanalysemodul (6) eingerichtet ist, Veränderungen der von dem Strömungsgerät (1) emittierten Geräusche zu erkennen und diese Veränderungen zu analysieren.

4. Vorrichtung nach Anspruch 3, wobei das Geräuschanalysemodul (6) eingerichtet ist, Veränderungen je nach ihrer Relevanz für einen sicheren und störungsfreien Betrieb des Strömungsgerätes (1) in unterschiedliche vorgebbare Klassen einzuordnen.

5. Vorrichtung nach Anspruch 4, wobei der Lautsprecher (4) auch von dem Geräuschanalysemodul (6) ansteuerbar ist und das Geräuschanalysemodul (6) eingerichtet ist, bei festgestellten Veränderungen, die in vorgebbare Klassen fallen, akustische Signale über den Lautsprecher (4) zu erzeugen.

6. Vorrichtung nach einem der vorhergehenden Ansprüche, wobei das Geräuschanalysemodul (6) eingerichtet ist, bestimmte Anteile der von dem Strömungsgerät (1) emittierten Geräusche bestimmten Betriebsparametern des Strömungsgerätes (1) zuzuordnen und diese Parameter zumindest zu messen oder zu regeln.

7. Vorrichtung nach einem der vorhergehenden Ansprüche, wobei das Geräuschbeeinflussungsmodul (6) eingerichtet ist, aus den von dem Mikrofon (3) aufgenommenen Geräuschen Signale zur aktiven Geräuschbeeinflussung zu erzeugen und damit den Lautsprecher (4) anzusteuern.

8. Verfahren zur Geräuschanalyse und Geräuschbeeinflussung für ein Strömungsgerät (1) , wobei mit mindestens einem gemeinsamen Mikrofon (3) von dem Strömungsgerät (1) und/oder angeschlossenen Leitungen (2) emittierte Geräusche aufgenommen und an ein Geräuschanalysemodul (6) und ein Geräuschbeeinflussungsmodul (5) weitergeleitet werden, wobei das Geräuschanalysemodul (6) die Geräusche nach vorgebbaren Kriterien analysiert und das Geräuschbeeinflussungsmodul (5) aus den Geräuschen Gegensignale erzeugt, die einen Lautsprecher (4) ansteuern, so dass dieser die Geräusche unterdrückt, verringert oder nach vorgebbaren Kriterien verändert, und wobei das Geräuschanalysemodul (6) eine Messung einer Strömungsgeschwindigkeit durchführt.

9. Verfahren nach Anspruch 8, wobei das Geräuschanalysemodul (6) mindestens eine der folgenden Analysen an dem Geräusch durchführt:
a. Ermittlung eines periodischen Signals zur Messung einer Drehzahl,
b. Ermittlung einer Veränderung des Geräusches und Klassifizierung der Veränderung in vorgebbare Klassen je nach Relevanz der Veränderung für zumindest Sicherheit oder störungsfreien Betrieb,
c. Erkennung des Auftretens einer Resonanz,
d. Erkennung einer Unwucht eines rotierenden Bauteils,
e. Erkennung eines Lagerschadens eines Lagers für ein rotierendes Bauteil,
f. Erkennung eines Typs eines Bauteils anhand vorgebbarer gespeicherter Kalibrierdaten für verschiedene Typen eines Bauteils.

10. Verfahren nach Anspruch 9, wobei mindestens ein gemessener Parameter als Ist-Wert für eine Regelung des Strömungsgeräts (1) genutzt wird.

11. Verfahren nach Anspruch 9, wobei das Geräuschanalysemodul (6) bei vorgebbaren Parameterbereichen oder Veränderungen, die in vorgebbare Klassen fallen, mit zugeordneten Signalen den Lautsprecher (4) ansteuert, um eine Warnmeldung oder Störmeldung zu erzeugen.

12. Verfahren nach Anspruch 9, wobei bei Erkennung des Beginns einer Resonanz Schritte eingeleitet werden, die Resonanz nicht auftreten zu lassen oder sie schnell zu überwinden.

## Claims

1. Device for analysing noise and influencing noise in a flow device (1), having at least one microphone (3) and at least one loudspeaker (4), wherein the microphone (3) is connected to a noise analysis module (6) and a noise influencing module (5), and the loudspeaker (4) can be actuated at least by the noise influencing module (5), **characterised in that** the noise analysis module (6) is designed to ascertain the flow velocity of a flow from its noises detected by means of the microphone (3).

2. Device according to claim 1, wherein the loudspeaker (4) can also be actuated by the noise analysis module (6) to emit a warning signal.

3. Device according to claim 1 or 2, wherein the noise analysis module (6) is designed to identify changes in the noises emitted by the flow device (1) and to analyse these changes.

4. Device according to claim 3, wherein the noise analysis module (6) is designed to classify changes into different predeterminable classes depending on their relevance for safe and failure-free operation of the flow device (1).

5. Device according to claim 4, wherein the loudspeaker (4) can also be actuated by the noise analysis module (6) and the noise analysis module (6) is designed to generate acoustic signals via the loudspeaker (4) when changes are identified which fall into predeterminable classes.

6. Device according to any of the preceding claims, wherein the noise analysis module (6) is designed to associate certain portions of the noise emitted by the flow device (1) with certain operating parameters of the flow device (1) and to at least measure or control these parameters.

7. Device according to any of the preceding claims, wherein the noise influencing module (6) is designed to generate signals for active noise influencing from the noises captured by the microphone (3) and to use said signals to actuate the loudspeaker (4).

8. Method for analysing noise and influencing noise for a flow device (1), wherein noises emitted by the flow device (1) and/or connected lines (2) are captured by means of at least one common microphone (3) and routed to a noise analysis module (6) and a noise influencing module (5), wherein the noise analysis module (6) analyses the noises according to predeterminable criteria and the noise influencing module (5) generates from the noises counter-signals which actuate a loudspeaker (4), such that the latter suppresses, reduces or changes the noises according to predeterminable criteria, and wherein the noise analysis module (6) performs a measurement of a flow velocity.

9. Method according to claim 8, wherein the noise analysis module (6) performs at least one of the following analyses on the noise:
a. ascertaining a periodic signal for measuring a speed,
b. ascertaining a change in the noise and classifying the change into predeterminable classes depending on the relevance of the change for at least safety or failure-free operation,
c. identifying the occurrence of a resonance,
d. identifying an imbalance in a rotating component,
e. identifying bearing damage in a bearing for a rotating component,
f. identifying a type of a component using predeterminable stored calibration data for different types of a component.

10. Method according to claim 9, wherein at least one measured parameter is used as an actual value for control of the flow device (1).

11. Method according to claim 9, wherein the noise analysis module (6) actuates the loudspeaker (4) with associated signals in the event of predeterminable parameter ranges or changes which fall into predeterminable classes in order to generate a warning message or failure message.

12. Method according to claim 9, wherein when the onset of a resonance is identified, steps are initiated to prevent the resonance from occurring or to overcome it quickly.

## Revendications

1. Dispositif d'analyse du bruit et d'influence du bruit d'un appareil d'écoulement (1), présentant au moins un microphone (3) et au moins un haut-parleur (4), dans lequel le microphone (3) est relié à un module d'analyse du bruit (6) et un module d'influence du bruit (5), et le haut-parleur (4) peut être commandé au moins par le module d'influence du bruit (5), **caractérisé en ce que** le module d'analyse du bruit (6) est configuré pour déterminer leur vitesse d'écoulement à partir de bruits d'un écoulement détectés au moyen du microphone (3).

2. Dispositif selon la revendication 1, dans lequel le haut-parleur (4) peut également être commandé par le module d'analyse du bruit (6) pour émettre un signal d'avertissement.

3. Dispositif selon la revendication 1 ou 2, dans lequel le module d'analyse du bruit (6) est configuré pour détecter des variations des bruits émis par l'appareil d'écoulement (1) et analyser lesdites variations.

4. Dispositif selon la revendication 3, dans lequel le module d'analyse du bruit (6) est configuré pour classer des variations selon leur pertinence pour un fonctionnement sûr et sans problème de l'appareil d'écoulement (1) dans différentes classes prédéfinissables.

5. Dispositif selon la revendication 4, dans lequel le haut-parleur (4) peut également être commandé par le module d'analyse du bruit (6) et le module d'analyse du bruit (6) est configuré pour produire, en cas de variations constatées qui appartiennent à des classes prédéfinissables, des signaux acoustiques par le biais du haut-parleur (4).

6. Dispositif selon l'une quelconque des revendications précédentes, dans lequel le module d'analyse du bruit (6) est configuré pour associer certaines parties des bruits émis par l'appareil d'écoulement (1) à certains paramètres de fonctionnement de l'appareil d'écoulement (1) et pour au moins mesurer et commander ces paramètres.

7. Dispositif selon l'une quelconque des revendications précédentes, dans lequel le module d'influence du bruit (6) est configuré pour produire, à partir des bruits enregistrés par le microphone (3), des signaux pour influencer activement le bruit et commander ainsi le haut-parleur (4).

8. Procédé d'analyse du bruit et d'influence du bruit pour un appareil d'écoulement (1), dans lequel des bruits émis par l'appareil d'écoulement (1) et/ou des conduites raccordées (2) sont enregistrés avec au moins un microphone (3) commun et transmis à un module d'analyse du bruit (6) et à un module d'influence du bruit (5), dans lequel le module d'analyse du bruit (6) analyse les bruits selon des critères prédéfinissables, et le module d'influence du bruit (5) produit des contre-signaux à partir des bruits, signaux qui commandent un haut-parleur (4) de sorte que celui-ci supprime, diminue ou modifie les bruits selon des critères prédéfinissables, et dans lequel le module d'analyse du bruit (6) réalise une mesure d'une vitesse d'écoulement.

9. Procédé selon la revendication 8, dans lequel le module d'analyse du bruit (6) réalise au moins l'une des analyses suivantes sur le bruit :
a. détermination d'un signal périodique pour mesurer une vitesse de rotation,
b. détermination d'une variation du bruit et classification de la variation dans des classes prédéfinissables selon la pertinence de la variation pour au moins la sécurité ou un fonctionnement sans problème,
c. détection de l'apparition d'une résonance,
d. détection d'un déséquilibre d'un composant rotatif,
e. détection d'un défaut de palier d'un palier pour un composant rotatif,
f. détection d'un type de composant à l'aide de données d'étalonnage prédéfinissables stockées pour différents types d'un composant.

10. Procédé selon la revendication 9, dans lequel au moins un paramètre mesuré est utilisé comme valeur réelle pour un réglage de l'appareil d'écoulement (1).

11. Procédé selon la revendication 9, dans lequel le module d'analyse du bruit (6) commande le haut-parleur (4) avec des signaux associés en cas de plages de paramètres prédéfinissables ou des variations, qui appartiennent à des classes prédéfinissables, pour produire un message d'avertissement ou un message d'interférence.

12. Procédé selon la revendication 9, dans lequel lorsque le début d'une résonance est détectée, des mesures sont prises pour empêcher la survenance d'une résonance ou pour la surmonter rapidement.
